(19) Europäisches Patentamt

European Patent Office

Office européen des brevets

(11) **EP 3 872 456 A1**

(12) **EUROPEAN PATENT APPLICATION**

(43) Date of publication:
**01.09.2021 Bulletin 2021/35**

(51) Int Cl.:
*G01F 3/10* (2006.01)     *G01F 25/00* (2006.01)

(21) Application number: **21157971.9**

(22) Date of filing: **18.02.2021**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **26.02.2020   US 202062981791 P**

(71) Applicant: **Romet Limited**
**Mississauga, ON L4W 2S5 (CA)**

(72) Inventors:
• **COLLVER, Brent**
  **Mississauga, Ontario L4W 2S5 (CA)**
• **LIN, Lezhong**
  **Mississauga, Ontario L4Z 3W9 (CA)**
• **WANG, Xinmin**
  **Mississauga, Ontario L4W 2S5 (CA)**
• **SMICH, Andrew**
  **Mississauga, Ontario L4W 2S5 (CA)**

(74) Representative: **Boult Wade Tennant LLP**
**Salisbury Square House**
**8 Salisbury Square**
**London EC4Y 8AP (GB)**

(54) **ROTARY GAS METER WORKING CONDITION MONITORING SYSTEM AND A ROTARY GAS METER HAVING A ROTARY GAS METER WORKING CONDITION MONITORING SYSTEM**

(57)     A working condition monitoring system for a positive displacement rotary flow meter determines flow rate and differential pressure information for logging to determine a history of such data for a meter in the field. Deviation from good working data established for the meter model may be used such as to indicate maintenance and/or repair needs. Mechanical or other wear in a meter may lead to higher differential pressure measures for a given flow rate (or a lower measured flow rate for a given differential pressure) than is true for a meter in good working order. A corrective factor responsive at least to a current different pressure may be applied to correct a measure of flow rate that is determined in response to a measure of impeller rotation to account for additional flow of gas through the meter that is not driving the impeller(s).

EP 3 872 456 A1

**Description**

**FIELD**

The present disclosure relates to rotary meters to measure a fluid and more particularly to a rotary gas meter working condition monitoring system.

**BACKGROUND**

A rotary meter measures various parameters relating to a fluid flowing through the meter where a measure of volume is typically a chief goal. Maintaining meter accuracy is important to give correct results and maintain confidence. Meters to lose accuracy such as over time through use. Meters even of a same model may lose accuracy at different rates and points in time due to a variety of variations in use and/or incidents occurring to the respective line being measured.

Monitoring a working condition may be useful for a variety of reasons including one or more of making metering adjustments and scheduling meter work such as maintenance and/or repair work.

**SUMMARY**

A working condition monitoring system for a positive displacement rotary flow meter determines flow rate and differential pressure information for logging to determine a history of such data for a meter in the field. Deviation from good working data established for the meter model may be used such as to indicate maintenance and/or repair needs. Mechanical or other wear in a meter may lead to higher differential pressure measures for a given flow rate (or a lower measured flow rate for a given differential pressure) than is true for a meter in good working order. A corrective factor responsive at least to a current different pressure may be applied to correct a measure of flow rate that is determined in response to a measure of impeller rotation to account for additional flow of gas through the meter that is not driving the impeller(s).

There is provided a working condition monitoring system. The system comprises a main control unit coupled to each of: a first pressure communication assembly and a second pressure communication assembly to provide pressure information from separate first and second locations within a positive displacement rotary meter to be monitored; a metering unit providing rotation information for the meter, the rotation information useful to determine flow rates; at least one interface; and a storage device. The main control unit is configured to: determine a current differential pressure from the pressure information; determine a current flow rate from the rotation information; and store the current differential pressure in accordance with the current flow rate in interval records maintained by the main control unit.

The main control unit may be configured to define each interval of the interval records in response to respective percentages of a maximum flow rate of the rotary meter, and use the current flow rate to determine which of the interval records to store the current differential pressure.

The storage device may store good working condition data (e.g. defining a curve Q) representing a baseline of differential pressure and flow rate data; and the main control unit may be configured to: if the current flow rate is lower than a minimum allowable flow rate associated with the current differential pressure, as determined using the baseline, perform at least one of: i) log an alarm to the storage device, and ii) communicate an alarm via the at least one interface. The main control unit may be configured to normalize the current differential pressure and apply a factor thereto prior to an evaluation using the baseline.

The main control unit may be configured to communicate the interval records via the at least one interface.

The main control unit may be configured to: enter a sleep mode, wherein the metering unit continues to collect rotation information; and enter a wake mode in response to the rotation information. The main control unit may then be configured to determine the current differential pressure, determine the current flow rate and store the current differential pressure in accordance with the current flow rate during the wake mode.

The main control unit may determine and store such information at least on a daily basis.

The main control unit may comprise a differential pressure detecting unit coupled to the first pressure communication assembly and the second pressure communication assembly to provide the differential pressure, the differential pressure unit determining the differential pressure and providing the differential pressure to a processing device of the main control unit.

In an example, the first pressure communication assembly and the second pressure communication assembly may comprise respective pressure leads in fluid communication with the separate locations within the meter. In an example, the first pressure communication assembly and the second pressure communication assembly may comprise respective pressure sensors located to measure a first pressure and a second pressure for the separate first and second locations within the meter, the first pressure and the second pressure communicated to the main control unit to determine the differential pressure.

The separate first and second locations may comprise, respectively, a fluid inlet and a fluid outlet of the meter.

The at least one interface may comprise a display unit. The at least one interface may comprise a communication interface to communicate information to a location remote from the meter.

The system may comprise a control housing to contain the main control unit, the control housing mounted to the meter.

The system may apply a corrective factor to correct the current flow rate. For example, the main control unit may be configured to: apply a corrective factor to the current flow rate to define a corrected flow rate, the corrective factor responsive to at least the current differential pressure; and at least one of store and communicate the corrected flow rate.

The storage device may comprise a look up table storing corrective factors enabled for look-up by the main control unit using the current differential pressure and the current flow rate.

There is provided a positive displacement rotary meter comprising a working condition monitoring system in accordance with any of the features and aspects shown and/or described herein.

In accordance with an embodiment, there is provided a method comprising: performing a repair triggered by a positive displacement rotary meter providing a working conditioning monitoring system, the meter configured to trigger an alarm in response to an operating condition where a current flow rate is lower than the minimum allowable flow rate associated with a current differential pressure.

The method may comprise receiving the alarm to trigger an inspection of the meter to diagnose and determine the repair. The meter may comprise a working conditioning monitoring system in accordance with any of the features and aspects shown and/or described herein.

These and other aspects will be apparent from the embodiments shown and described.

BRIEF DESCRIPTION OF DRAWINGS

Figs. 1A, 1B and 1C are illustrations of rotary meters with a working condition monitoring system in accordance with examples.

Fig. 2 is an interior view of a rotary meter.

Figs. 3A and 3B are block diagrams of a working condition monitoring system in accordance with examples. The working condition monitoring systems of Figs. 3A and 43 may be utilized with either example of the rotary meter shown in Figs. 1A and 1B.

Figs. 4 and 5 each show graphs of error rates at various rates of flow (e.g. percentage of max. flow) and differential pressure at various rates of flow.

Fig. 6 is a flowchart for a process in accordance with an embodiment.

The present concept is best described through certain embodiments thereof, which are described herein with reference to the accompanying drawings, wherein like reference numerals refer to like features throughout. It is to be understood that the term invention, when used herein, is intended to connote the inventive concept underlying the embodiments described below and not merely the embodiments themselves. It is to be understood further that the general inventive concept is not limited to the illustrative embodiments described below and the following descriptions should be read in such light.

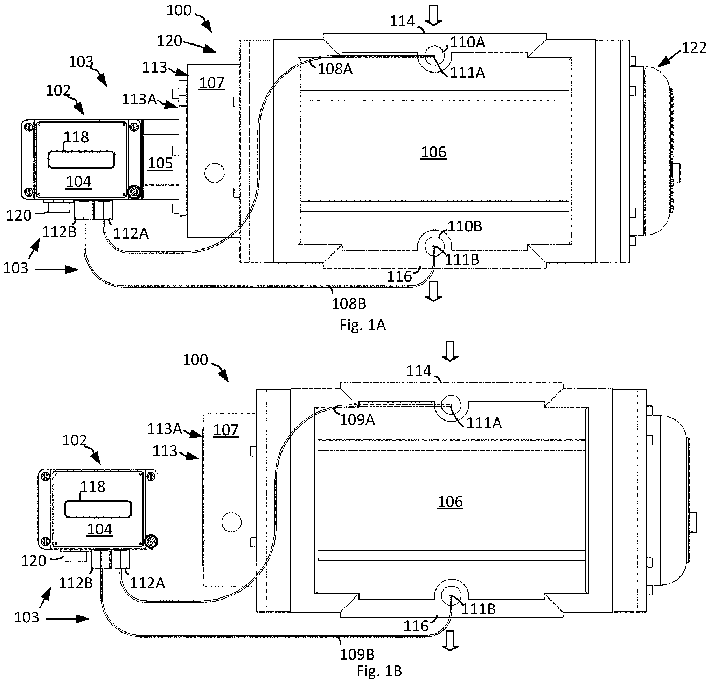

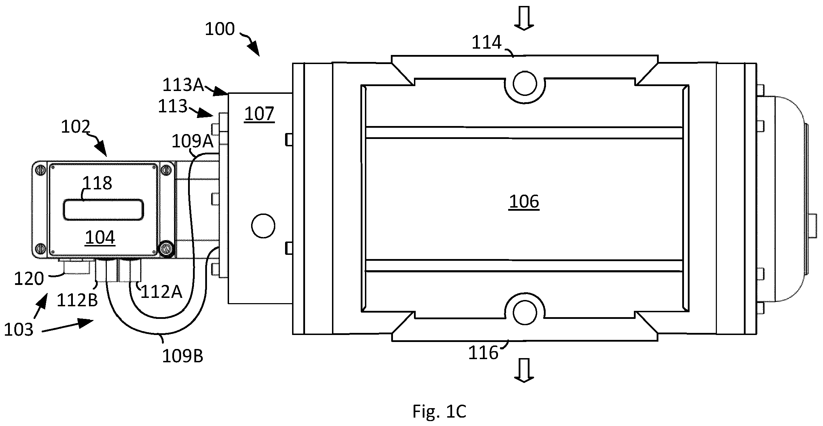

Figs. 1A, 1B and 1C show a rotary gas meter 100 having an electronic gas meter platform 102. Electronic gas meter platform 102 provides a main control unit for the rotary meter. Electronic gas meter platform 102 has a platform housing 104. In Figs. 1A and 1C, platform housing 104 is mounted via a mounting bracket 105 to a rotary meter housing 106 of meter 100. In Fig. 1B, platform housing 104 is unmounted and maybe mounted remotely such as to another structure (not shown). The mounting bracket 105 may couple to a metering housing 107 on one end of rotary meter housing 106. In an embodiment, internally to metering housing 107 there is a magnetic metering unit 113 that is responsive to the rotation of a shaft driven by a rotary impeller in rotary meter housing 106 to measure a flow of fluid through the rotary gas meter 100. Magnetic metering unit 113 may comprise a Weigand sensor as a rotation counter sensor 113A. In another embodiment, rotational information is determined using a different sensing or counting technique for a metering unit. For example, other types of devices that may be used as a metering unit to record rotational information include an optical reader, an encoder, a pin wheel, etc.

Electronic gas meter platform 102 may provide a foundation of a working condition monitoring system 103, defining a main control unit. Working condition monitoring system 103 may comprise, in accordance with a differential pressure monitoring embodiment as shown, one differential pressure sensor (e.g. a differential pressure detecting unit) having local pressure sensors and pressure leads extending to rotary meter housing 106. Fig. 1A shows pressure leads 108A, 108B extending to remote pressure connectors 110A, 110B on rotary meter housing 106 near ports 111A and 111B. Pressure sensors (not shown) coupled to the leads 108A, 108B are mounted inside electronic gas meter platform 102. Pressure leads 108A, 108B extend from local connectors or local ports 112A, 112B of electronic gas meter platform 102. Pressure leads 108A, 108B extending to remote pressure connectors 110A, 110B may, respectively, may define a first pressure communication assembly (108A/110A) and a second pressure communication assembly (108B/110B).

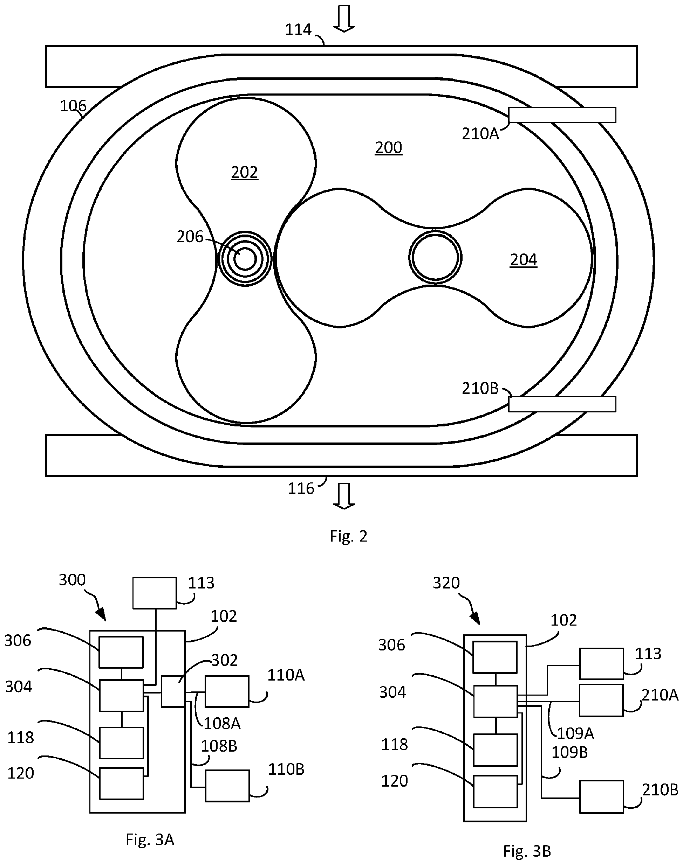

In Fig. 1B the working condition monitoring system 103 has two electronic leads 109A, 109B leading to ports 111A, 111B on rotary meter housing 106 to connect to electronics inside rotary meter housing 106. A processor of the electronic gas meter platform 102 may determine the differential pressure. Fig. 2, described further below, shows pressure sensors 210A, 210B (not necessarily to scale) inside rotary meter housing 106 near the inlet 114 and outlet ports 116 of meter 100. Pressure sensors 210A, 210B may be connected to the electrical leads 109A, 109B to provide pressure information to a processor of platform 102. Electronic leads 109A, 109B extending to remote pressure sensors 210A, 210B may, respectively, may define a first pressure communication assembly (109A/210A) and a second pressure communication assembly (109B/210B).

In Fig. 1C, the two electronic leads 109A, 109B extend to metering housing 107 and through ports therein (not shown). Pressure sensors may be mounted as in Fig. 2 and as described with respect to Fig. 1B.

In Figs. 1A - 1C, the respective pressure sensors measure pressure respectively at separate locations inside rotary meter 100, namely at an inlet 114 and an outlet 116 of the housing 106 through which the fluid flows. As such, the mounting location of the pressure sensor, *per se,* is not important as is where the pressure is taken inside the housing. In the embodiments, a first pressure communication assembly (e.g. sensor and leads, etc.) and a second pressure communication assembly (e.g. sensor and leads and/or conduit, etc.) communicate pressure information for the separate locations within rotary meter 100 to be monitored. In one embodiment (e.g. Fig. 1A), the information is a fluid signal and in the others (e.g. Figs 1B and 1C) an electronic signal.

Fig. 2 shows an interior 200 of housing 106, in an end view of meter 100. The view is enlarged relative to Figs. 1A, 1B and 1C. Rotary meter housing 106 houses driven members such as a pair of rotary impellers 202 and 204. Interior 200 houses impellers 202 and 204 that are driven by the flow of fluid and the rotation of which impellers may be used to measure fluid rate and volume measurements. Fig. 2 shows the placement of sensors 210A/210B near inlets 114 and 116 respectively of housing 106. It is understood that for the embodiment of Fig. 1A, the pressure leads may extend to the locations of these sensors so as to take the pressure at the same locations in housing 106 but that sensors 210A/210 are not located within the housing 106.

Gearing (not shown) may be driven such as by impeller shaft 206 of impeller 202. The gearing may drive a mechanical counter such as for measuring volume, etc.

Magnetic metering unit 113 may also be responsive to rotation of shaft 206 such as for an electronic counter or other measures (e.g. flow). A magnet (not shown) may be fixed on shaft 206 (or one coupled thereto for rotation) and a magnetic sensor (e.g. a Weigand sensor module or other rotation counter sensor 113A) positioned about the shaft such that the sensor picks up a signal from a magnetic pole of the magnet with each rotation of shaft 206 to generate one pulse per rotation. The sensor is communicatively coupled to platform 102 to provide the pulses and hence a count of the rotations of an impeller (e.g. 202 or 204). As the pair of impellers 202, 204 rotate together, a count of the rotation of one counts for both. Each rotation of the impellers has a predetermined volumetric value for every meter size. Thus platform 102 is thus configured to calculate the volume passed through the meter in response to the pulses that are picked up by the magnetic sensor. To determine a flow rate, platform 102 uses a measure of time, for example, starting a clock, like a stopwatch, in response to the pulses. For example:

$$\text{Flow rate} = \frac{\text{volumetric equivalence of the number of pulses during stopwatch}}{\text{time of the stopwatch}}$$

In an embodiment, for example, where platform 102 is not directly mounted to the metering housing 107, platform 102 may receive a different kind of volumetric pulse input. Platform 102 may receive an input such as from a mechanical gas meter counter or another electronic gas meter counter, which may be directly mounted to the metering housing 107. These input pulses have a similar function as the pulses picked up by the magnetic sensor and platform 102 can calculate the flow rate in a similar manner the in the direct-mounted platform. A difference between these direct-mounted and remotely located embodiments may be that a frequency of the pulse input is much lower than in the direct-mounted platform. In such an example, platform 102 cannot perform a very accurate and in-time flow calculation.

Examples of a differential pressure sensor are PC11D (WTP10) Differential pressure sensor from Nanjing Wotian Technology Co., Ltd. and DP86 differential pressure sensor from TE Connectivity Ltd. An example of a pressure sensor (210A, 210B) is a WTP series pressure sensor from Nanjing Wotian Technology Co., Ltd. It may be desired that a differential pressure sensor measures with accuracy to $\pm$ 0.05 inches of water column ((w.c.) or an equivalent measure and a range of 0 to 24 inches of water column).

The differential pressure sensor or pressure sensors may be selected for use in accordance with the expected measurement range, environment, etc. expected for the task. Such parameters may comprise expected temperature range, differential range, resolution, error, and common pressure range for the meter installations and configurations.

With reference again to Figs. 1A - 1C, electronic gas meter platform 102 may provide a user interface 118 such as for displaying measurements and/or alarms, etc. as further described. Electronic gas meter platform 102 may provide a wired communication interface 120 as further described.

Figs. 3A and 3B show block diagrams of a working condition monitoring system 300 and 320 in accordance with examples. In Fig. 3A, working condition monitoring system 300 comprises electronic gas meter platform 102 having a differential pressure sensor 302 coupled to pressure leads 108A, 108B for taking pressure remotely. Differential pressure sensor 302 provides a differential pressure detecting unit to detect and provide the differential pressure.

In Fig. 3B, differential pressure monitoring system 320 comprises electronic gas meter platform 102 coupled to the two pressure sensors 210A/210B via electrical leads 109A, 109B. Working condition monitoring system 320 is defined without a differential pressure sensor 302.

In Figs. 3A and 3B, electronic gas meter platform 102 comprises a processor 304, a storage device 306 as well as user interface 118. Processor 304 is coupled to storage device 306 and user interface 118. Electronic gas meter platform 102 (e.g. processor 304) may also be coupled to other sensors or components. As shown, processor 304 is coupled to magnetic metering unit 113 for other measurements such as revolution counter data to determine a flow rate.

Electronic gas meter platform 102 may further comprise wired communication interface 120 which is coupled electronically to processor 304.

Each of the user interface 118 and the wired communication interface 120 may provide a data communication interface, which may be an alarm signaling interface, controllable by processor 304 to communicate various data determined by processor 304, whether remotely and/or locally to meter 100. The data may comprise measured and/or calculated data and may comprise data that signals an alarm. Measured and/or calculated data may be pressure or differential pressure values, flow rates, etc. Alarm data may comprise a single indicating an alarm condition is detected, such as when a measured and/or calculated data value is out of a desired scope or range for such data value, where such scope or range may be defined by one or more thresholds. It may be preferred that processor 304 only stores and/or reports data such as to a remote device coupled thereto (not shown), which remote device then performs an alarm determination process, if desired.

An on-board (relative to platform 102) wireless communication interface (not shown) is another example of a data communication interface and it may be electronically controlled by processor 304.

Processor 304 may be a microprocessor, a microcontroller or other. Processor 304 may be implemented as a processor core, central processing unit (CPU) or other.

Storage device 306 may comprise a memory such as a programmable memory, for example, an electrically erasable read-only memory (EEPROM).

User interface 118 may be any one or more of a display screen, a light, a bell or other output device that may signal an alarm. It may be preferred to display the differential pressure value and/or alarm.

Electronic gas meter platform 102 may also comprise a wired communication interface 120, as noted, such as for communicating data including differential pressure data, flow rate data, corrective data, and/or alarm data. Wired communication interface 120 may be a component of the electronic gas meter platform. Wired communication interface 120 may be coupled to a short range and/or long range communication device (not shown) providing an external communication device. Short range and/or long range communication device may comprise an antenna and associated circuits. In an example, not shown, either short range or long range communication device may be on-board and internal to the rotary meter 100. A short range and/or long range communication device may be configured to communicate using known protocols or standards such as to communicate short message service (SMS) messages/text messages via a cellular network, messages via a Bluetooth™ network or Zigbee™ network, etc. (Bluetooth is a trademark of Bluetooth SIG, Inc. and Zigbee is a trademark of Zigbee Alliance). Such messages may be alarm messages or data reporting messages or both. Wired communication interface may comprise a universal serial bus (USB), RS-232, Ethernet or other standard interface or a proprietary interface. Wired communication interface 120 may also provide access to storage device 306 such as for providing programming, to retrieve stored values, etc. However other interfaces or means to program storage device 306 may be provided.

Revolution counter data, (differential) pressure measurement data, as well as various parameters used to determine flow rate measurements from the sensor data as well as the determined flow rate data is stored to storage device 306 (e.g. EEPROM memory).

WORKING CONDITION MONITORING

In a positive displacement rotary meter, the shaft rotation of an impeller is proportional to, and thus is useful to provide a measurement of, a flow of fluid through the meter. The measurement may be within an accepted error range. This premise holds true when the flow meter is in working order where there is minimal undesired flow of fluid (gas) through the meter.

Wear of meter bearings, and/or buildup of deposits on impellers, casings and mechanical parts may occur due to various causes. Causes may include any of: prolonged operation of the meter, using an improper oil or low volume of oil, and dirt (e.g. particulate contamination, debris) in the gases. These factors increase friction and the differential pressure value across the meter, and simultaneously increase the flow of the unmeasured volume of gas passing through between the clearance associated with the impellers, headplates and pressure body. In such scenarios the measured flow under represents the actual flow as the RPM of the impeller shaft (or other counter metric) is no longer in the same relationship with the rate of flow. That is, the RPM and/or any measured flow based on such is outside the accepted error range.

As shown in Fig. 2, the lobed impeller type rotary meter consists of two figure-eight shaped impellers 202, 204, positioned at 90° from each other, which rotate in opposite directions inside the pressure body of fixed volume. Gas flowing through the meter's pressure body causes the impellers to turn, thereby creating a measurement chamber bounded by the impeller, pressure body and its headplates (e.g. at the metering housing side 120 and a thrust housing side 122 of Fig. 1A). This known volume is then discharged, and another identical volume of gas is trapped by the other impeller. Gas is alternately trapped and discharged four times for each impeller revolution. The displaced gas per revolution is multiplied by the number of impeller revolutions to determine the volume of gas passed by the meter.

The accuracy of a meter is defined as the degree to which a meter correctly measures the volume of gas passing through its measuring chamber. Accuracy may be determined by comparing the volume registered by the meter with a known volume registered by a connected proving device.

Meters are designed and manufactured to respective tolerances and parameters that ensure good sealing characteristics for impellers and bearings and good (minimal) friction produced by the sealed bearings for the impellers, for example. Issues with the bearings or impellers may cause fluid leakage though the meter whereby gas passes through that is not measured by routine operation of the metering unit (which may operate by magnet or otherwise) and processor. Flow rate measurement inaccuracy is undesirable.

Sensor data values (measured data) and/or calculated data values from such measured data may be taken through factory or other testing to establish baseline data - (e.g. good working data), including relationships between such data. For example, for a particular meter model having a maximum flow rate (defining the model's size), measures of various data may be made at every 10% of the maximum flow rate, which data and/or calculated data may be plotted (e.g. stored in a table, used to define a curve, etc.) for subsequent look-up. The data may comprise a ground truth flow rate determined by a connected proving device (e.g. showing each 10% or decile of max flow or some other sample size), respective pressures at and/or a differential pressure between the meter's inlet 114 and outlet 116 as these 10% of max flow rates, and a meter generated flow rate. Meter generated flow rate may be determined by the platform 102 (its respective processor) from the rotation counter sensor 113A (e.g. a Weigand sensor module in magnetic metering unit 113) counting RPM or other counter metric. The data may comprise the counter metric (e.g. RPM at the respective % of the max flow rate).

It is understood that to determine flow rate additional data is used such as gas gravity and temperature, which may be constant values for these test data gathering operations as well as the volume discharged with each impeller revolution. Data from a plurality of sample meters of a same model and size may be collected and averaged or otherwise aggregated, to determine baseline values for the meter model. Similar operations may be performed for different models and/or sizes.

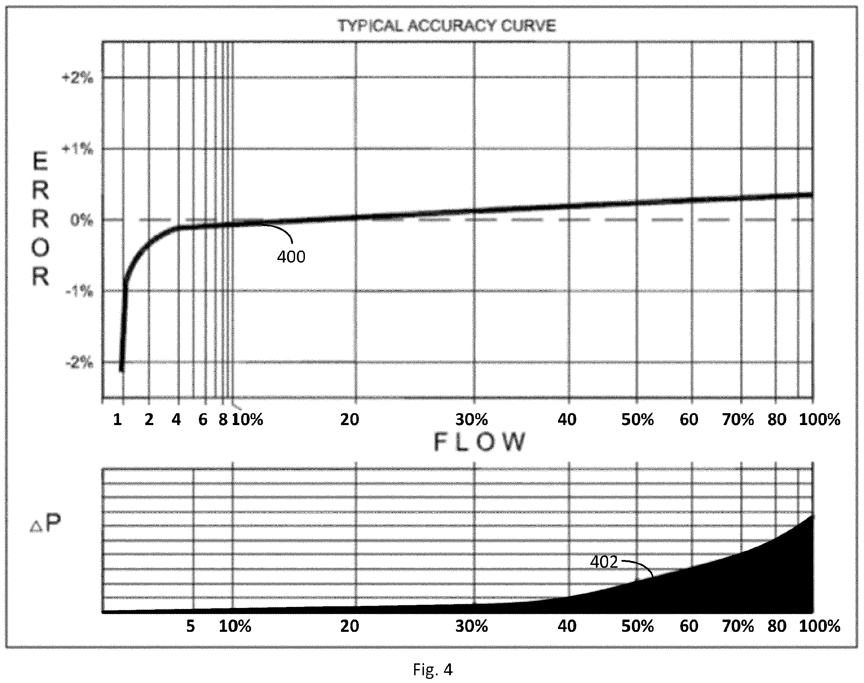

Fig. 4. shows examples of accuracy (error) and differential pressure curves (respectively 400 and 402). The accuracy curve 400 is shown as error percentage at given flow rates where the flow rates are shown as a percentage of a maximum flow rate for a meter model. The differential pressure curve 402 is also measured at the respective percentages of a maximum flow rate. These curves 400 and 402 show baseline or good working order data for the respective flow rates. It is understood that data may be plotted differently (e.g. with differential pressure on the X axis and flow rate on the Y axis).

Since the volume of the measurement chamber (e.g. defined by the impellers, head plates and pressure body), pressure, temperature, specific gravity of gas and flow rate as initially tested remains relatively unchanged, the only factor that can affect meter accuracy is an increase in internal friction within the meter. As a result, there is a significant increase in differential pressure value and at the same time a decrease in the accuracy of the meter caused by the unmeasured volume of gas passing through.

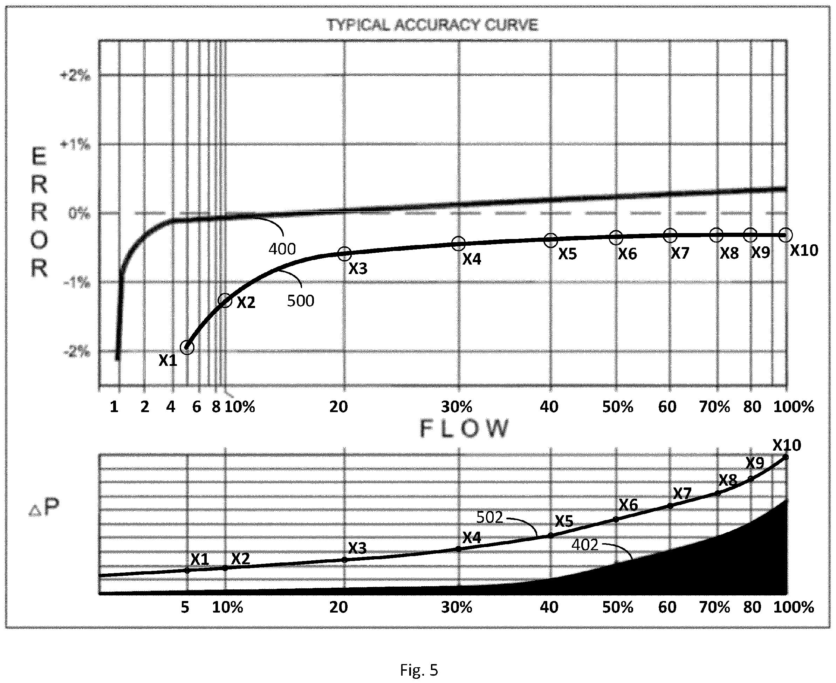

Fig. 5 shows additional error and differential pressure curves 500 and 502 along with curves 400 and 402. Curves 500 and 502 result from an increase in internal friction within the meter. In the differential pressure graph 502 (bottom) there is shown differential pressure readings at points X1 to X10 associated with flow rates of 5% of maximum and then every 10 % of maximum from 10% (e.g. 5%, 10%, 20% ... 90%, 100%). In the accuracy graph (top), there is shown a second measure of accuracy at each of points X1 to X10, showing greater error than the error graph 400 for a new meter (repeated from Fig. 4).

The flow meter, particularly platform 102 using the differential and/or pressure sensors and revolution counter sensors such as described, may be configured to perform working condition monitoring. Working condition monitoring may comprise taking sample measures of sensor data and/or calculated data at various samples sizes of gas flow in the field, where the meter is installed and operating. The data is stored and provides a history of a particular meter's working condition. The data may be stored for various time periods (e.g. a year of data, a month, etc.). The data may be reported (e.g. communicated). Data comparisons may be made using baseline data for the meter model (and size if applicable). Deviations from the baseline of good working order data that exceed defined thresholds may raise (trigger) alarms, additional reporting, etc. For example, in an embodiment, if the current flow rate is lower than a minimum allowable flow rate associated with the current differential pressure, as determined using the baseline, the control unit of the working condition monitoring system is configured to perform at least one of: i) log an alarm to the storage device, and ii) communicate an alarm via the at least one interface.

Platform 102 via processor 304, may be configured to: measure meter flow rate using magnetic metering unit 113; and measure meter differential pressure (e.g. between inlet 114 to outlet 116), either through external differential ports or meter cavity internally, via its differential pressure sensor (e.g. 302). Platform 102 maybe configured to monitor the flow rate degrading at selected flow rates (example 30%, 50%, and 80% of maximum flow rate) by saving differential pressure and percentage of maximum flow rate readings in interval records. An interface may be provided to enable a user (e.g. a customer) to change the flow rates of interest settings to accommodate real working conditions.

Platform 102 may be configured to monitor the flow rate degrading at, for example, a single flow rate of interest (example 50% of maximum) by storing differential pressure and percentage of maximum flow rate readings in daily log records. It is understood that for a single flow rate of interest, the data for any one day may not have the flow rate due to operating conditions. An interface may be provided to enable a user (e.g. a customer) to change this flow rate of interest. In an embodiment, a daily log may be established and data stored in EEPROM (an example of an on-board storage device).

Platform 102 may be configured to monitor the instance flow rate condition at every 10% of max. flow rate. For example, platform 102 may save differential pressure and percentage of max. flow rate readings, and the calculated min. allowable percentage of maximum flow rate in a Q (flow rate) log.

The platform 102 may be configured to instantly trigger, show and/or send an impeller RPM (Revolution Per Minute) low alarm when the measured flow rate is lower than the calculated minimum allowable flow rate. For example, platform 102 may determine a differential pressure from current measurements, determine an expectation of the RPM for such a differential pressure such as from previously determined and saved (factory) good working data, and determine a current measured RPM such as from the Weigand sensor value(s). A comparison may be performed and low alarm triggered if the difference is outside a minimum allowable RPM (e.g. or a minimum allowable flow rate equivalent). It will be understood that the flow rate generated by platform 102 using the RPM may be used instead of the RPM value.

A calculation of minimum allowable flow rate may be determined as provided below:

The typical flow rate vs differential curve at atmospheric pressure with air are known and determined experimentally (e.g. as previously described measures taken through factory or other testing),

$$Q = f(\Delta P_{test})$$

In the field, platform 102 measures the differential pressure, then normalizes it to the test condition as atmospheric pressure with air,

$$\Delta P_{test} = g(\Delta P_{field}, P_{field}, P_{test}, Gravity_{field})$$

Data values as a constant or user-settable constant may be used such as for $P_{test}$ and/or $Gravity_{field}$ for example to avoid a sensor or other measuring device on board.

A safety factor of 1.5 is applied as is a differential measurement uncertainty of 0.05:

$$\Delta P'_{test} = \frac{\Delta P_{test} + \Delta P_{uncertainty}}{Factor_{safety}}$$

A default safety factor of 1.5 and a default differential measurement uncertainty of 0.05" w.c. may be pre-stored for use by platform 102. An interface may be provided to enable a user (e.g. a customer) to change (e.g. set) any of the default safety factor and the differential measurement uncertainty. The interface may be configured to reset any of the parameters to the factory default setting(s).

Finally, platform 102 calculates the min. allowable flow rate as:

$$Q_{min} = f(\Delta P'_{test})$$

That is, platform 102 uses $\Delta P'_{test}$ to look-up the flow rate therefor from its previously stored good working data $Q$.

Platform 102 may be configured such that related parameters for the calculations, etc. may be settable and downloadable via the wired communication interface (e.g. 120). A $Q$ low alarm and any logs may be downloadable via the wired communication interface (e.g. 120). Communications may be compatible with various third party and/or common communication protocols, standards and drivers.

APPLICATION OF WORKING CONDITION MONITORING TO IMPROVE ROTARY MEASUREMENT ACCURACY AND PREDICTIVE MAINTENANCE OF ROTARY METER

Flow rate vs differential pressure are important performance data to show the working condition of rotary meter's impellers. By implementing the working condition monitoring system in a rotary meter, the meter can check the real-time variance of flow rate at various flow rates. Therefore, this function can improve the foreseeable meter measurement accuracy and schedule a predictive maintenance on a rotary gas meter.

As described herein, the working condition monitoring may be implemented in an electronic gas meter platform such as platform 102 comprising EEPROM memory (e.g. for storage device 118). Working condition data including baseline data and field measured and calculated data is saved in the EEPROM memory. Available EEPROM memory space is limited and various logs may be limited in size accordingly. Data management is a tradeoff of data integrity and memory space.

Platform 102 may be configured to measure the flow rate and the differential and update the data tables at each wakeup. The electronic platform may be configured with a sleep mode mostly in order to save the battery power until it has to be wakeup to perform an operation. By way of example, the platform may be configured such that it has a sleep mode. During this mode, its lower-power counter is still counting the input pulses from Wiegand sensor. When the counting reaches a pre-set number, it means that 10 CF volume past through the meter. The platform then wakes up (is invoked) at this moment to do further operations such as various calculation. During this wakeup, the platform measures the flow rate and the differential and updates one or more data tables.

To calculate the min. allowable flow rate and trigger a $Q$ Low alarm, the typical flow rate vs. differential characteristic data for each meter size is saved in EEPROM as well. This $Q$ alarm can be sent through a short message if the electronic meter is equipped with any modem device.

The alarm is also registered in alarm log and interval. The monitoring data, including both flow rate and differential readings, and the calculated min. allowable flow rate, are saved in the interval and daily log records as well for historical recording.

Differential Pressure Correction Factor

The concepts of rotary positive displacement meters and associated operation principles are previously discussed above. It will be understood that the accuracy of a meter is defined as the degree to which a meter correctly measures the volume of gas passing through its measuring chamber. Accuracy is determined by comparing the volume registered by the meter with a known volume registered by a connected proving device. The accuracy of a rotary meter is built-in through the careful machining of its components and cannot be adjusted. That is, the components are not mechanically adjustable once installed.

As noted, during prolonged operation of the meter, using the improper oil or low volume of the oil, dirt in the gases - causes wear of the bearings, buildup of deposits on impellers, casings and mechanical parts. These factors increase friction and the differential pressure value across the meter, and simultaneously the flow of the unmeasured volume of gas passing through between the clearance associated with the impellers, head plates and meter cylinder. Since the volume of the measurement chamber, pressure, temperature, specific gravity of gas and flow rate as initially tested remains relatively unchanged, factors that can affect meter accuracy are an increase in internal friction within the meter (e.g. wear of bearings, timing gears, etc.) and/or leak in the impeller seal etc. These mechanical issues suggest maintenance activities may be indicated.

Reference is directed again to Fig. 5. There is a significant increase in differential pressure value (curve 502) and at the same time a decrease in the accuracy of the meter caused by the unmeasured volume of gas passing through (curve 500), which may be compared to the baseline curves 400 and 402.

Monitoring the increase in difference of differential pressure value from X1 to X10 Fig. 5, it is possible to determine with great accuracy the value of the correction factor for the unmeasured volume of gas flowing through the meter. The correction factor may be an amount of gas at a flow point (e.g. along a curve determined from the measurements at each of the points X1 to X10. The correction factor may be an amount of gas or a flow rate, depending on the metric being measured.

Adding this factor at the same gas flow points from X1 to X10 the measurement will be closely approximated to the original factory characteristics such as shown in curve 400.

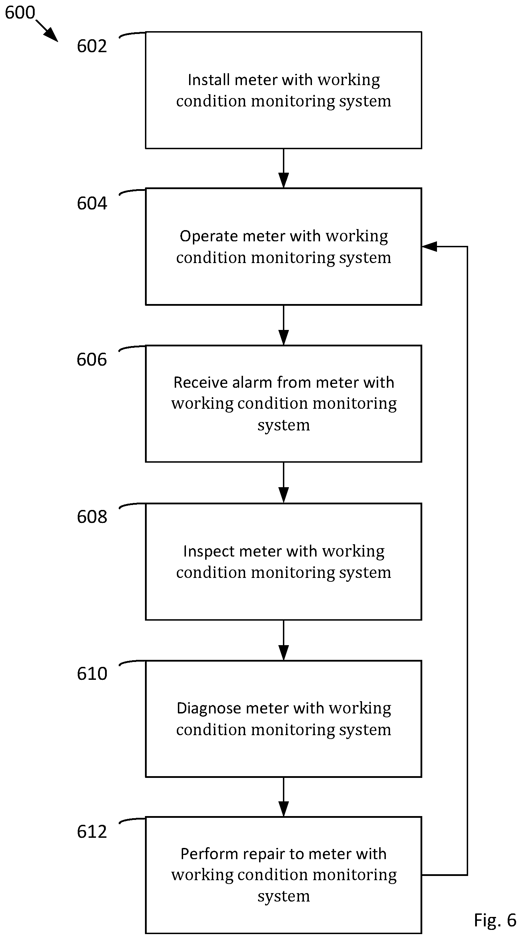

The platform may thus be configured to combine continuous (regular and frequent) monitoring of the meter condition as well as avoid the incorrect estimation of the amount of gas consumed by the user. The monitoring allows the platform to determine and raise alarms for anomalies and any progressive deterioration that exceeds a threshold (e.g. maximum allowable differential pressure). An alarm may trigger an inspection and repair process (e.g. see Fig. 6 for an embodiment). The monitor may use the measured differential pressure (e.g. in absolute terms or as a difference to a factory measure) to determine and apply a corrective factor to flow or other gas measurements.

Fig. 6 is a flowchart for a process 600 such as for inspection and repair, in accordance with an embodiment. At step 602, a meter with a working condition monitoring system is installed. In an embodiment, the meter is a positive displacement rotary meter in accordance with an embodiment herein and the working condition monitoring system is in accordance with an embodiment herein, particular one configured to trigger an alarm. At step 604, the meter is operated. At step 606, an alarm is received.

In an embodiment, the working condition monitoring system triggers an alarm in response to an operating condition where a current flow rate is lower than the minimum allowable flow rate associated with a current differential pressure. In an embodiment, curve Q is analyzed to determine the minimum allowable flow rate using the current differential pressure determined by the system.

At step 608, the meter is inspected and at step 610 an operational issue regarding the meter is diagnosed (e.g. a wear issue, a buildup issue, a leak issue, as described, etc.)

At step 612 a repair associated with the diagnosis is performed (e.g. to the meter). A repair may comprise a simple or complex task. A repair may comprise a maintenance task such as a cleaning, lubricant service, etc. A complex task may comprise a repair or other change to a distribution system in which the meter is installed (e.g. where debris is entering the meter, it is entering with the gas from the distribution system).

From step 612, for example, once the meter and/or distribution system is ready following a repair, operations loop back to step 604 for continued operation of the meter. In a non-depicted embodiment, operations may loop back to step 604 if an operational issue is not diagnosed at step 610.

In addition to computing device aspects, a person of ordinary skill will understand that computer program product aspects are disclosed, where instructions are stored in a non-transient storage device (e.g. a memory, CD-ROM, DVD-ROM, disc, etc.) to configure a computing device to perform any of the method aspects stored herein.

Practical implementation may include any or all of the features described herein. These and other aspects, features and various combinations may be expressed as methods, apparatus, systems, means for performing functions, program products, and in other ways, combining the features described herein. A number of embodiments have been described. Nevertheless, it will be understood that various modifications can be made without departing from the spirit and scope of the processes and techniques described herein. In addition, other steps can be provided, or steps can be eliminated, from the described process, and other components can be added to, or removed from, the described systems. Accordingly, other embodiments are within the scope of the following claims.

Throughout the description and claims of this specification, the word "comprise" and "contain" and variations of them mean "including but not limited to" and they are not intended to (and do not) exclude other components, integers or steps. Throughout this specification, the singular encompasses the plural unless the context requires otherwise. In particular, where the indefinite article is used, the specification is to be understood as contemplating plurality as well as singularity, unless the context requires otherwise.

Features, integers characteristics, compounds, chemical moieties or groups described in conjunction with a particular aspect, embodiment or example of the invention are to be understood to be applicable to any other aspect, embodiment or example unless incompatible therewith. All of the features disclosed herein (including any accompanying claims, abstract and drawings), and/or all of the steps of any method or process so disclosed, may be combined in any combination, except combinations where at least some of such features and/or steps are mutually exclusive. The invention is not restricted to the details of any foregoing examples or embodiments. The invention extends to any novel one, or any novel combination, of the features disclosed in this specification (including any accompanying claims, abstract and drawings) or to any novel one, or any novel combination, of the steps of any method or process disclosed.

**Claims**

1. A working condition monitoring system comprising:

   a main control unit coupled to each of:

   a first pressure communication assembly and a second pressure communication assembly to provide pressure information from separate first and second locations within a positive displacement rotary meter to be monitored;
   a metering unit providing rotation information for the meter, the rotation information useful to determine flow rates;
   at least one interface; and
   a storage device; and

   wherein the main control unit is configured to:

   determine a current differential pressure from the pressure information;
   determine a current flow rate from the rotation information; and
   store the current differential pressure in accordance with the current flow rate in interval records maintained by the main control unit.

2. The system of claim 1, wherein the main control unit is configured to define each interval of the interval records in response to respective percentages of a maximum flow rate of the rotary meter, and use the current flow rate to determine which of the interval records to store the current differential pressure.

3. The system of claim 1 or claim 2, wherein:

   the storage device stores good working condition data representing a baseline of differential pressure and flow rate data; and
   the main control unit is configured to:
   if the current flow rate is lower than a minimum allowable flow rate associated with the current differential pressure, as determined using the baseline, perform at least one of: i) log an alarm to the storage device, and ii) communicate an alarm via the at least one interface.

4. The system of claim 3, wherein the main control unit is configured to normalize the current differential pressure and apply a factor thereto prior to the look-up.

5. The system of any one of claims 1 to 4, wherein the main control unit is configured to communicate the interval records via the at least one interface.

6. The system of any one of claims 1 to 5, wherein the main control unit is configured to:

   enter a sleep mode, wherein the metering unit continues to collect rotation information; and
   enter a wake mode in response to the rotation information; and
   wherein the main control unit is configured to determine the current differential pressure, determine the current flow rate and store the current differential pressure in accordance with the current flow rate during the wake mode.

7. The system of any one of claims 1 to 6, wherein the main control unit determines and stores the differential pressure information daily.

8. The system of any one of claims 1 to 7, wherein the main control unit comprises a differential pressure detecting unit coupled to the first pressure communication assembly and the second pressure communication assembly to provide the differential pressure, the differential pressure unit determining the differential pressure and providing the differential pressure to a processing device of the main control unit.

9. The system of any one of claims 1 to 8, wherein the separate first and second locations comprise, respectively, a fluid inlet and a fluid outlet of the meter.

**10.** The system of any one of claims 1 to 9, wherein the at least one interface comprises a display unit; and a communication interface to communicate information to a location remote from the meter.

**11.** The system of any one of claims 1 to 10, comprising a control housing to contain the main control unit, the control housing mounted to the meter.

**12.** The system of any one of claims 1 to 11, wherein the main control unit is configured to:

apply a corrective factor to the current flow rate to define a corrected flow rate, the corrective factor responsive to at least the current differential pressure; and
at least one of store and communicate the corrected flow rate.

**13.** The system of claim 12 wherein the storage device comprises a look up table storing corrective factors enabled for look-up by the main control unit using the current differential pressure and the current flow rate.

**14.** A positive displacement rotary meter comprising a working condition monitoring system in accordance with any one of claims 1 to 13.

**15.** A method comprising:
performing a repair triggered by a positive displacement rotary meter providing a working conditioning monitoring system, the meter triggering an alarm in response to an operating condition where a current flow rate is lower than a minimum allowable flow rate associated with a current differential pressure.

Fig. 1A

Fig. 1B

Fig. 1C

EP 3 872 456 A1

Fig. 2

Fig. 3A

Fig. 3B

Fig. 4

Fig. 5

EP 3 872 456 A1

600

602

Install meter with working
condition monitoring system

604

Operate meter with working
condition monitoring system

606

Receive alarm from meter with
working condition monitoring
system

608

Inspect meter with working
condition monitoring system

610

Diagnose meter with working
condition monitoring system

612

Perform repair to meter with
working condition monitoring
system

Fig. 6

Europäisches
Patentamt

European
Patent Office

Office européen
des brevets

# EUROPEAN SEARCH REPORT

Application Number

EP 21 15 7971

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | GB 2 392 501 A (LATTICE INTELLECTUAL PROPERTY [GB]) 3 March 2004 (2004-03-03) * figures 1, 2 * * page 4 - page 5 * ----- | 1,5-10, 14 | INV. G01F3/10 G01F25/00 |
| X | US 7 295 934 B2 (DRESSER INC [US]) 13 November 2007 (2007-11-13) * figures 1, 2 * * column 13, line 53 - line 60 * * column 16, line 51 - column 17, line 23 * * column 9 - column 10 * * column 15, line 22 - line 31 * ----- | 1-4, 11-13,15 | |
| X | EP 2 080 999 A1 (DRESSER INC [US]) 22 July 2009 (2009-07-22) * figure 1 * ----- | 1,15 | |
| X | US 7 860 677 B2 (DRESSER INC [US]) 28 December 2010 (2010-12-28) * figure 2A * * column 6, line 65 - column 7, line 50 * ----- | 1 | TECHNICAL FIELDS SEARCHED (IPC) G01F |
| A | EP 1 906 157 A2 (DRESSER INC [US]) 2 April 2008 (2008-04-02) * paragraph [0016] * * paragraph [0054] * * paragraph [0061] * ----- | 6 | |

The present search report has been drawn up for all claims

| Place of search | Date of completion of the search | Examiner |
|---|---|---|
| The Hague | 30 June 2021 | Régert, Tamás |

EPO FORM 1503 03.82 (P04C01)

## ANNEX TO THE EUROPEAN SEARCH REPORT
## ON EUROPEAN PATENT APPLICATION NO.

EP 21 15 7971

This annex lists the patent family members relating to the patent documents cited in the above-mentioned European search report.
The members are as contained in the European Patent Office EDP file on
The European Patent Office is in no way liable for these particulars which are merely given for the purpose of information.

30-06-2021

| Patent document cited in search report | | Publication date | Patent family member(s) | | Publication date |
|---|---|---|---|---|---|
| GB 2392501 | A | 03-03-2004 | NONE | | |
| US 7295934 | B2 | 13-11-2007 | CA | 2578708 A1 | 15-08-2007 |
| | | | EP | 1821082 A2 | 22-08-2007 |
| | | | US | 2007192046 A1 | 16-08-2007 |
| | | | US | 2008215259 A1 | 04-09-2008 |
| EP 2080999 | A1 | 22-07-2009 | CA | 2649750 A1 | 18-07-2009 |
| | | | CN | 101498600 A | 05-08-2009 |
| | | | EP | 2080999 A1 | 22-07-2009 |
| | | | US | 2009187356 A1 | 23-07-2009 |
| US 7860677 | B2 | 28-12-2010 | CA | 2570082 A1 | 09-06-2007 |
| | | | CA | 2847640 A1 | 09-06-2007 |
| | | | EP | 1795876 A2 | 13-06-2007 |
| | | | US | 7212953 B1 | 01-05-2007 |
| | | | US | 2007213949 A1 | 13-09-2007 |
| EP 1906157 | A2 | 02-04-2008 | CA | 2600164 A1 | 29-03-2008 |
| | | | EP | 1906157 A2 | 02-04-2008 |
| | | | US | 2008088464 A1 | 17-04-2008 |

EPO FORM P0459

For more details about this annex : see Official Journal of the European Patent Office, No. 12/82